(19) **Europäisches Patentamt / European Patent Office / Office européen des brevets**

(11) **EP 1 749 720 B1**

(12) **EUROPEAN PATENT SPECIFICATION**

(45) Date of publication and mention
of the grant of the patent:
**03.11.2010 Bulletin 2010/44**

(51) Int Cl.:
**B60T 8/172** *(2006.01)* **G01L 5/28** *(2006.01)*

(21) Application number: **06015971.2**

(22) Date of filing: **01.08.2006**

(54) **Wheel action force detection system and wheel action force detection method**

System und Verfahren zur Bestimmung der Radwirkungskraft

Système de détection de la force d'action d'une roue et procédé de détection de la force d'action d'une roue

(84) Designated Contracting States:
**DE FR**

(30) Priority: **02.08.2005 JP 2005224045**

(43) Date of publication of application:
**07.02.2007 Bulletin 2007/06**

(73) Proprietor: **JTEKT Corporation**
**Osaka-shi**
**Osaka 542-8502 (JP)**

(72) Inventors:
• **Kurata, Fumito**
**Toyota-shi**
**Aichi-ken, 471-857 (JP)**
• **Asai, Mitsuru**
**Nagakute-cho**
**Aichi-gun**
**Aichi-ken480-1192 (JP)**
• **Takahashi, Toshimichi**
**Nagakute-cho**
**Aichi-gun**
**Aichi-ken480-1192 (JP)**
• **Makino, Hiroaki**
**Nagakute-cho**
**Aichi-gun**
**Aichi-ken480-1192 (JP)**
• **Motohashi, Nobutsuna**
**Osaka-shi**
**Osaka542-8502 (JP)**

(74) Representative: **Jostarndt, Hans-Dieter**
**Jostarndt Patentanwalts-AG**
**Brüsseler Ring 51**
**52074 Aachen (DE)**

(56) References cited:
EP-A2- 0 611 959    WO-A-94/21480
GB-A- 2 317 664    US-A- 5 186 042
US-A1- 2003 145 651

**Description**

BACKGROUND OF THE INVENTION

**Field of the Invention**

The present invention relates to an art for detecting force acting on a wheel.

Related Art

Conventionally, there are well known arts for improving traveling stability of a vehicle at the time of traveling, eventually safety of the vehicle, such as ABS (Anti-lock Brake System), TRC (Traction Control), VSC (Vehicle Stability Control), and the like.

ABS belongs to an art for preventing wheels from being locked at the time of braking suddenly or braking on a slippery road surface.

If front wheels of a vehicle are locked, frictional force at a touching part between each of the wheels and a road surface is reduced. Accordingly, a distance from the start point of braking to the stop point_of the vehicle, that is, braking distance in this case is larger than the distance in the case that the wheels are not locked.

If the front wheels are locked, frictional force along the axial direction of a rotary shaft of each front wheel which is necessary to make the vehicle turn is reduced, whereby the vehicle becomes hard to turn even though an operator steers. Furthermore, if rear wheels are locked, frictional force along the axial direction of a rotary shaft of each rear wheel is reduced, whereby the rear wheels may sideslip so as to make the behavior of the vehicle at the time of braking unstable.

By providing the ABS on the vehicle, the braking ability of the vehicle can be improved (the braking distance can be shortened) and the traveling of the vehicle at the time of braking can be stabilized.

TRC is an art for preventing driving wheels from racing at the time of starting or accelerating a vehicle.

When the vehicle is started or accelerated suddenly on a slippery road surface, such as a snow-covered road or a rain-wet road, the driving wheels may race. If the driving wheels race at the time of turning the vehicle, frictional force along the axial direction of a rotary shaft of each driving wheel is reduced. Accordingly, in the case that the vehicle is a front drive vehicle, the front wheels sideslip so as to go away from the center of turning. In the case that the vehicle is a rear drive vehicle, the rear wheels sideslip so as to go away from the center of turning. As a result, traveling stability at the time of turning may be reduced.

Such racing of the driving wheels can be prevented by fine adjusting of an accelerator (easing the accelerator slightly) so as to reduce rotation speed of the driving wheels. However, in the case of traveling on a slippery road surface or the case that output of an engine of the vehicle is large, the fine adjusting of the accelerator is difficult.

By providing the TRC on the vehicle, the racing of the driving wheels can be prevented easily so as to improve the traveling stability of the vehicle.

VSC is an art for adjusting a braking force of each wheel and output of an engine of a vehicle suitably so as to improve the traveling stability of the vehicle at the time of turning.

For example, in the case that the vehicle enters a curve at too fast a speed, it is difficult to make the vehicle turn by a steering operation by an operator. As the case may be, the vehicle runs out of the curve. In the case that the vehicle enters the curve at too fast a speed, the VSC reduces output of an engine and brakes one of the rear wheels at the inside of the curve so as to turn the front portion of the vehicle toward the inside of the curve, whereby the vehicle is prevented from running out of the curve.

At the time of steering of the vehicle, if an operator steers toward the inside of the curve excessively, the rear wheels sideslip. As the case may be, the vehicle spins. At the time of steering of the vehicle, if an operator steers toward the inside of the curve excessively, the VSC brakes one of front wheels at the outside of the curve so as to prevent the spin.

By providing the VSC on the vehicle, frictional force between each wheel and the road surface is utilized effectively so as to turn the vehicle toward the direction which the operator requires within the range not passing the limit, whereby the traveling of the vehicle at the time of turning is stabilized.

Each of the above-mentioned arts, the ABS, the TRC and the VSC controls with high accuracy and utilizes force acting on each wheel at the touching part between the wheel and the road surface (including frictional force), that is, a wheel action force so as to improve traveling stability of the vehicle, eventually safety of the vehicle. Accordingly, for the effective function of the ABS, the TRC and the VSC, on the premise, it is necessary to detect a wheel action force with high accuracy.

However, the wheel rotates at a high speed at the time of traveling so that the touching part between the wheel and the road surface always moves on the outer peripheral surface of the wheel and is not fixed to a constant position. Accordingly, it is difficult to detect a wheel action force directly.

Then, conventionally, in view of a pivotal support member of the wheel deformed elastically by receiving force from the wheel, a wheel action force is found by elastic deformation amount of the pivotal support member of the wheel as described in the Japanese Patent Laid Open Gazette 2004-45370 and the Japanese Patent Laid Open Gazette 2002-350254 for example.

There is also known an art that a dedicated detection device for detecting elastic deformation amount of the pivotal support member of the wheel is interposed between the wheel and the pivotal support member of the wheel so as to detect a wheel action force experimentally (without actually traveling) as described in the Japanese Patent Laid Open Gazette 2003-14563 for example.

However, the arts described in the patent literatures have the below problems.

With regard to the arts described in the Japanese Patent Laid Open Gazette 2004-45370 and the Japanese Patent Laid Open Gazette 2002-350254, there is a problem that it is difficult to detect with high accuracy a wheel action force of the wheel corresponding to a so-called disc brake of the vehicle especially at the time of braking.

Namely, with regard to members constituting the disc brake, a basal part of a caliper slidably supporting a brake pad is normally fixed to the pivotal support member of the wheel. Accordingly, when the disc brake is actuated so as to generate a braking force, the pivotal support member of the wheel is deformed elastically by a reaction force of the braking force of the brake. As a result, elastic deformation amount of the pivotal support member of the wheel at the time of braking is a sum of a deformation amount caused by a wheel action force of the wheel and a deformation amount caused by a braking force of the disc brake. Accordingly, the accuracy of a wheel action force of the wheel found from an elastic deformation amount of the pivotal support member of the wheel at the time of braking is reduced.

Especially, in the case that a wheel action force is detected for a driving wheel, a rotary driving force from a driving source (engine or the like) acts on the pivotal support member of the wheel through the wheel and the brake. Accordingly, the accuracy of a wheel action force of the wheel found from an elastic deformation amount of the pivotal support member of the wheel at the time of braking is reduced further.

With regard to the art described in the Japanese Patent Laid Open Gazette 2003-14563, the dedicated detection device, which is not provided at the time of the actual traveling, is interposed between the wheel and the pivotal support member of the wheel. Accordingly, the positional relation between the wheel and the pivotal support member of the wheel and the gross weight of the surroundings of the wheel including the detection device are widely different from those in the actual traveling, whereby the detected result is not reliable. The detection device cannot be provided on the actual vehicle and cannot be utilized as a means detecting information submitted to the control of the vehicle (ABS, TRC and VSC) at the time of traveling on time.

US 2003/145651 describes a wheel bearing for measuring the contact forces between tire and road. First sensors are arranged on the stationary part of the wheel bearing in order to measure the forces acting on the wheel bearing and the currently acting braking forces are continuously determined by means of the second sensors, which are arranged on support members of the disc-brake caliper. During braking, the support forces of the brake disk are calculated from the measured forces in wheel bearing in order to arrive at the currently acting forces between the road and the tire.

SUMMARY OF THE INVENTION

An object of the present invention is to provide a wheel action force detection system and a wheel action force detection method for finding a braking force of a vehicle having a disc brake at the time of braking with high accuracy.

To achieve the object, a wheel action force detection system comprises: a deformation amount detection means detecting elastic deformation amount of a pivotal support member which pivotally supports a wheel rotatably; a braking force detection means detecting a braking force in the case that a disc brake fixed to the pivotal support member brakes the wheel; and a wheel action force calculation means calculating a longitudinal force, an axial force and a vertical force acting on the pivotal support member based on the elastic deformation amount of the pivotal support member, regarding the result of subtracting a longitudinal component of a reaction force of a braking force of the disc brake from a longitudinal force acting on the pivotal support member as a longitudinal force acting on the wheel, and regarding the result of subtracting a vertical component of a reaction force of a braking force of the disc brake from a vertical force acting on the pivotal support member as a vertical force acting on the wheel so as to calculate a wheel action force acting on the wheel at the touching part between the wheel and a road surface.

Accordingly, a wheel action force at the time of braking of the vehicle having the disc brake can be easily detected with high accuracy by revising an influence of braking of the disc brake on a deformation amount of the pivotal support member.

The wheel action force calculation means of the wheel action force detection system calculates longitudinal and vertical components of a braking force of the disc brake from the braking force of the disc brake, and an angle between a straight line, passing through a point of action of the braking force of the disc brake and a center of the rotary shaft of the wheel, and a horizontal plane.

Accordingly, the longitudinal and vertical components of braking force of the disc brake can be found with high accuracy by easy calculation.

The angle between the straight line, passing through the point of action of the braking force and the center of the rotary shaft of the wheel, and a horizontal plane is not more than 10 degrees upward or downward from the horizontal plane.

Accordingly, responsibility of the disc brake can be secured.

A wheel action force detection method comprises: a deformation amount and braking force detection process detecting an elastic deformation amount of the pivotal support member which pivotally supports the wheel rotatably and detecting a braking force in the case that the disc brake fixed to the pivotal support member brakes the wheel; and a wheel action force calculation process calculating a longitudinal force, an axial force and a vertical force acting on the pivotal support member based on the elastic deformation amount of the pivotal support member, regarding the result of subtracting a longitudinal component of a reaction force of a braking force of the disc brake from a longitudinal force acting on the pivotal support member as a longitudinal force acting on the wheel, and regarding the result of subtracting a vertical component of a reaction force of a braking force of the disc brake from a vertical force acting on the pivotal support member as a vertical force acting on the wheel so as to calculate a wheel action force acting on the wheel at the touching part between the wheel and a road surface.

Accordingly, a wheel action force at the time of braking of the vehicle having the disc brake can be easily detected with high accuracy by revising an influence of braking of the disc brake on a deformation amount of the pivotal support member.

With regard to the wheel action force calculation process, longitudinal and vertical components of a braking force of the disc brake are calculated from the braking force of the disc brake, and an angle between a straight line, passing through a point of action of the braking force of the disc brake and a center of the rotary shaft of the wheel, and a horizontal plane.

Accordingly, the longitudinal and vertical components of a braking force of the disc brake can be found with high accuracy by easy calculation.

The angle between the straight line, passing through the point of action of the braking force and the center of the rotary shaft of the wheel, and a horizontal plane is not more than 10 degrees upward or downward from the horizontal plane.

Accordingly, responsibility of the disc brake can be secured.

These, other and further objects, features and advantages will appear more fully from the following description with reference to accompanying drawings.

BRIEF DESCRIPTION OF THE DRAWINGS

Fig. 1 is a general view of an embodiment of a wheel action force detection system according to the present invention.

Fig. 2 is a flow chart of an embodiment of a wheel action force detection method according to the present invention.

Fig. 3 is a drawing of a traveling wheel viewed along an axial direction

DETAILED DESCRIPTION OF THE INVENTION

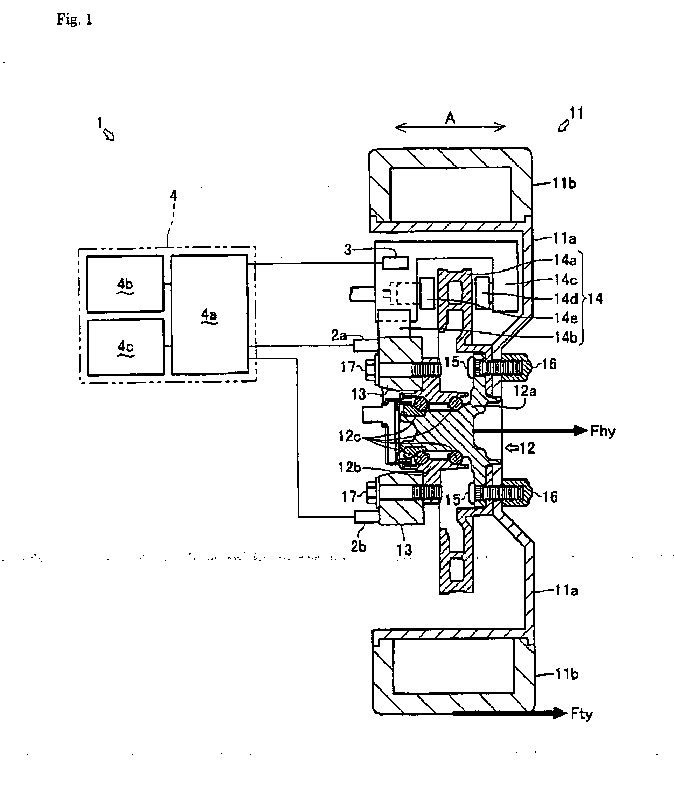

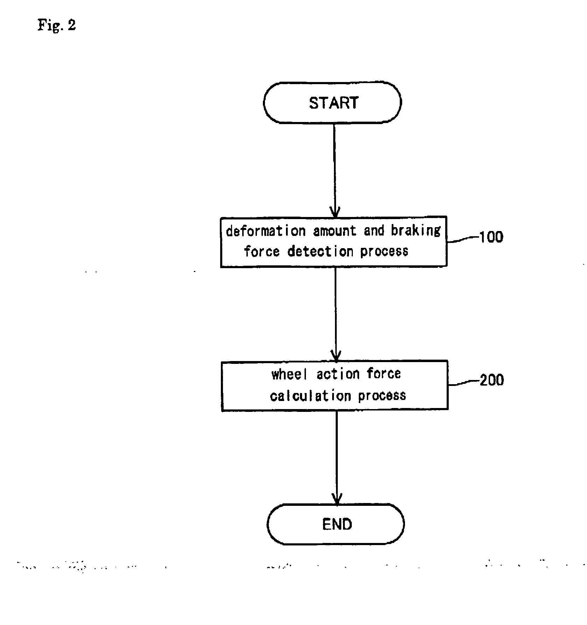

Hereinafter, explanation will be given on the construction of a part in the vicinity of a traveling wheel of a vehicle, to which a wheel action force detection system 1 is adopted, according to Figs. 1 and 2. The wheel action force detection system 1 is an example of a wheel action force detection system according to the present invention.

Herein, the "vehicle" in this application indicates a vehicle for transporting passengers and freight, such as a motorcar, widely. More concretely, the "vehicle" includes passenger cars, freight transport vehicles (such as truck trailers) and the like.

The part in the vicinity of the traveling wheel of the vehicle, to which the wheel action force detection system 1 is adopted, comprises the traveling wheel 11, an axle hub unit 12, a suspension unit 13, a disc brake 14 and the like.

The traveling wheel 11 comprises a wheel 11a and a tire 11b and is fixed to a wheel side member 12a discussed later so as not to be rotatable relatively.

In addition, the traveling wheel 11 in this embodiment is a driven wheel to which driving force is not transmitted from a driving source (an engine or the like) of the vehicle. However, the wheel action force detection system 1 according to the present invention can be adopted to not only a driven wheel but also a driving wheel (a wheel to which driving force is transmitted from a driving source (an engine or the like) of the vehicle).

The wheel action force detection system 1 according to the present invention can be adopted to any wheel whether the wheel is a steering wheel (a wheel whose steering angle is changeable) or not.

The axle hub unit 12 in this embodiment is constructed integrally with a ball bearing and mainly comprises the wheel side member 12a, a vehicle body side member 12b and balls 12c.

The wheel side member 12a functions as a rotary shaft of the traveling wheel 11 and as an inner ring of the ball bearing, and is fixed to the wheel 11a by bolts 15 and nuts 16 so as not to be rotatable relatively.

The vehicle body side member 12b functions as an outer ring of the ball bearing and as a member pivotally supporting the wheel side member 12a so as to be rotatable along the circumferential direction of the traveling wheel 11 and not to be slidable along the axial direction of the traveling wheel 11 (the direction of an arrow A in Fig. 1), and is fixed to the suspension unit 13 so as not to be rotatable relatively.

The suspension unit 13 is a structure which connects the traveling wheel 11 to the vehicle body so as to be rockable vertically,

The vehicle body side member 12b is fixed to the suspension unit 13 by bolts 17. Accordingly, the suspension unit 13, the vehicle body side member 12b and the bolts 17 are an example of a pivotal support member according to the present invention, and are integral so as to support the traveling wheel 11 rotatably.

The disc brake 14 in this embodiment is a so-called piston floating type disc brake and brakes the traveling wheel 11.

The disc brake 14 mainly comprises a rotor 14a, a caliper support member 14b, a caliper 14c and pads 14d and 14e.

The rotor 14a is substantially disk and is fixed to the wheel side member 12a so as not to be rotatable relatively similarly to the wheel 11a. In this case, the axis of the rotor 14a, the axis of the wheel 11a (that is, the axis of the traveling wheel 11) and the axis of the wheel side member 12a are in agreement with each other.

The caliper support member 14b is fixed to the suspension unit 13 and supports the caliper 14c so as to be slidable along the axial direction of the traveling wheel 11 (the direction of an arrow A in Fig. 1).

The caliper 14c is substantially U-like shaped and is supported by the caliper support member 14b. The pad 14d is fixed to the part of the caliper 14c facing the outer surface of the rotor 14a. A hydraulic cylinder is formed in the part of the caliper 14c facing the inner surface of the rotor 14a, and the pad 14e is fixed to a tip of a piston of the hydraulic cylinder.

When pressure oil is supplied to the hydraulic cylinder formed in the caliper 14c, the piston of the hydraulic cylinder is projected from the caliper 14c so that the pad 14e touches the inner surface of the rotor 14a. When the piston is projected from the caliper 14c further, the caliper 14c is slid against the caliper support member 14b by reaction force so that the pad 14d touches the outer surface of the rotor 14a. Herein, the "reaction force" in this application indicates the force of reaction.

Accordingly, with regard to the disc brake 14, the rotor 14a is pinched by the pads 14d and 14e so that the traveling wheel 11 is braked by frictional force generated in the touching parts between the pads 14d and 14e and the rotor 14a.

In addition, the disc brake 14 in this embodiment is the piston floating type disc brake which actuates a pair of pads by one hydraulic cylinder. However, a disc brake according to the present invention is not limited thereto and may alternatively be an opposed type disc brake that each pad has one hydraulic cylinder.

Though each of the piston floating type disc brake and the opposed type disc brake is a hydraulic disc brake, a disc brake according to the present invention is not limited to a hydraulic brake and may alternatively be a pneumatic, or mechanical brake.

Hereinafter, explanation will be given on the construction of the wheel action force detection system 1 according to Fig. 1.

Herein, the "wheel action force" in this application indicates force acting on the traveling wheel at the touching part between the traveling wheel and a road surface (force which the traveling wheel receives from the road surface). Accordingly, as shown in Formula 1, the wheel action force (Ft) is defined as a vector sum of a longitudinal force (Ftx), a vertical force (Ftz) and an axial force (Fty) acting at the touching part between the traveling wheel and a road surface.

$$\vec{Ft} = \vec{Ftx} + \vec{Fty} + \vec{Ftz} \qquad \text{(Formula 1)}$$

In addition, the "longitudinal direction" of the wheel action force indicates the direction in parallel to a horizontal plane (a plane perpendicular to the direction of gravity), and the "axial direction" of the wheel action force indicates the direction of the axis of the rotary shaft of the traveling wheel. Accordingly, in the case that the traveling wheel is a steering wheel, the "longitudinal direction" of the wheel action force is deviated from the longitudinal direction of the vehicle for the steering angle, and the "axial direction" of the wheel action force is deviated from the lateral direction of the vehicle for the steering angle. The "vertical direction" of the wheel action force is in agreement with the direction of gravity.

The wheel action force detection system 1 mainly comprises deformation amount sensors 2a and 2b, a braking force sensor 3 and a control device 4.

The deformation amount sensors 2a and 2b are an example of a deformation amount detection means according to the present invention, and detect the elastic deformation amount of the suspension unit 13 which pivotally supports the traveling wheel 11 rotatably. The deformation amount sensors 2a and 2b are attached to prescribed positions on the suspension unit 13 and detect minute deformation amount (strain) of the attached positions.

In addition, if circumstances require, the deformation amount sensors 2a and 2b are implanted in prescribed positions on the suspension unit 13.

As a concrete example of the deformation amount sensors 2a and 2b, a piezoelectric sensor, a strain gage, a semiconductor pressure sensor or the like is given.

In addition, though the wheel action force detection system 1 in this embodiment has two deformation amount sensors 2a and 2b, the number and attached position of a deformation amount detection means according to the present invention is not limited thereto, and is required to be selected corresponding to the shape and material of the pivotal support member, the positional relation to the other members, and the like.

Furthermore, though the deformation amount sensors 2a and 2b are attached to the prescribed positions on the suspension unit 13, the sensors may alternatively be attached to prescribed positions on the vehicle body side member 12b.

The braking force sensor 3 is an example of a braking force detection means according to the present invention, and detects a braking force in the case that the disc brake 14 that brakes the traveling wheel has a caliper support member 14b fixed to the suspension unit 13.

The braking force sensor 3 in this embodiment comprises a strain gage and is attached to the caliper 14c. When the disc brake 14 is actuated so as to make the pads 14d and 14e touch the surface of the rotor 14a, a frictional force is generated and the pads 14d and 14e pretend to rotate with the traveling wheel 11 along the rotation direction of the traveling wheel 11. As a result, the caliper support member 14b and the caliper 14c are deformed elastically corresponding to the frictional force generated at the touching parts between the strength of the pads 14d and 14e and the rotor 14a, that is, the braking force of the disc brake 14. The braking force sensor 3 detects the elastic deformation amount of the caliper 14c.

The elastic deformation amount of the caliper 14c is mutually related to the braking force of the disc brake 14. Accordingly, the same effect as detecting the braking force of the disc brake 14 is obtained.

In addition, the braking force detection means according to the present invention is not limited to the construction detecting the braking force of the disc brake 14 by detecting the elastic deformation amount of the caliper 14c as this embodiment. Any construction, which can detect a braking force in the case that the disk brake fixed to the pivotal support member brakes the traveling wheel, may be adopted.

For example, when the disc brake 14 is actuated and the frictional force is generated at the touching parts between the strength of the pads 14d and 14e and the rotor 14a, the caliper support member 14b and the caliper 14c are deformed elastically, whereby the relative positions of the pads 14d and 14e from the caliper support member 14b and the caliper 14c are changed when viewed from the axial direction of the traveling wheel 11. Accordingly, it may be constructed so that the change of the relative positions is detected by a piezoelectric sensor or a photosensor.

In the case that the disc brake is hydraulic type, oil pressure or temperature of oil is mutually related to speed of the vehicle and braking force. Accordingly, it may be constructed so as to detect the braking force in the case that the disc brake brakes the traveling wheel by detecting the oil pressure by an oil pressure sensor or detecting the temperature of hydraulic oil of the disc brake by a temperature sensor while detecting the vehicle speed (rotation speed of the traveling wheel) by a vehicle speed sensor.

The control device 4 mainly comprises a control part 4a, an input part 4b and a display part 4c.

The control device 4, is an example of a wheel action force calculation means according to the present invention, and calculates wheel action force of the traveling wheel 11.

The control part 4a comprises a storage means storing a program concerning the detection of wheel action force and the like, an extraction means extracting the program, an operation means performing prescribed operation according to the program, a memorization means memorizing a result of the operation, and the like.

More concretely, the control part 4a may be constructed so that a CPU, a ROM, a RAM, a HDD and the like are connected through a bus. Alternatively, the control part 4a may be constructed by a one-chip LSI.

The control part 4a may be a dedicated device, or may alternatively be constructed by a personal computer, a workstation or the like on the market.

The control part 4a is connected to the deformation amount sensors 2a and 2b so as to obtain the elastic deformation amount of the suspension unit 13 detected by the deformation amount sensors 2a and 2b. The control part 4a is connected to the braking force sensor 3 so as to obtain information concerning the braking force of the disc brake 14 detected by the braking force sensor 3.

The control part 4a calculates the wheel action force of the traveling wheel 11 according to the stored program concerning the detection of wheel action force.

In addition, for convenience, details of the calculation method of a wheel action force performed by the control part 4a are explained in an embodiment of the wheel action force detection method discussed later.

The input part 4b is connected to the control part 4a so that an operator inputs various data concerning the detection of a wheel action force through the input part 4b to the control part 4a.

The input part 4b may be a dedicated device, or may alternatively be constructed by a keyboard, a touch panel or the like on the market.

The display part 4c is connected to the control part 4a so as to display the data inputted through the input part 4b, the actuation status of the wheel action force detection system 1, the result of the wheel action force detection method, and the like.

The display part 4c may be a dedicated device, or may alternatively be constructed by a monitor, a liquid crystal display or the like on the market.

In addition, though the wheel action force detection system 1 in this embodiment is a testing device independent of the vehicle, the system may alternatively be provided on a vehicle which travels normally.

As an example of the construction that the wheel action force detection system according to the present invention is provided on a vehicle which travels normally, for example, it may be given that a program concerning the detection of wheel action force and the like are stored in an ECU (Engine Control Unit) so that the ECU is used as the wheel action force calculation means according to the present invention.

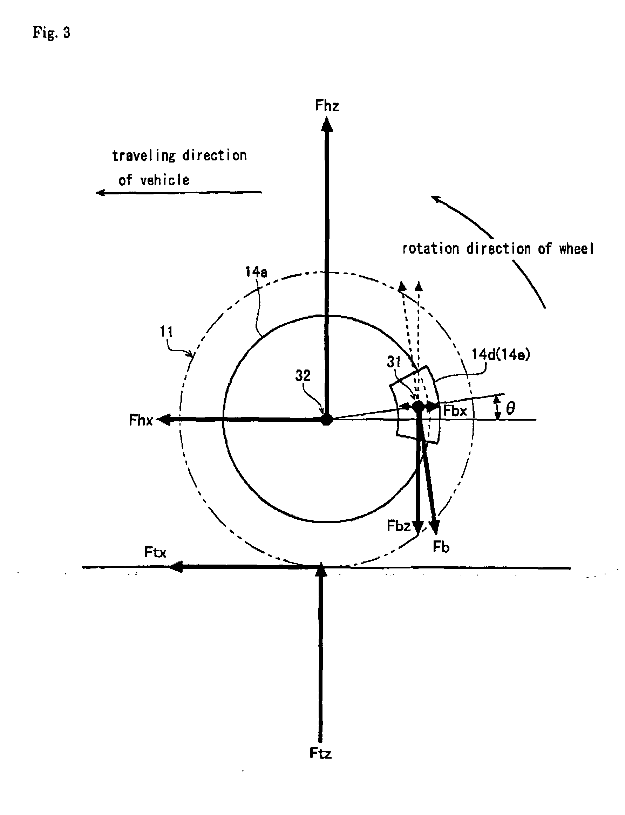

Hereinafter, explanation will be given of an embodiment of the wheel action force detection method according to the present invention referring to Figs. 2 and 3.

With regard to the embodiment of the wheel action force detection method according to the present invention, the wheel action force of the traveling wheel 11 is detected by using the wheel action force detection system 1. The embodiment of the method mainly comprises a deformation amount and braking force detection process 100 and a wheel action force calculation process 200.

With regard to the deformation amount and braking force detection process 100, an elastic deformation amount of the suspension unit 13 is detected, and a braking force is detected in the case that the disc brake 14 fixed to the suspension unit 13 brakes the traveling wheel 11.

With regard to the deformation amount and braking force detection process 100, the deformation amount sensors 2a and 2b detect an elastic deformation amount of the suspension unit 13 with time. Simultaneously, the braking force sensor 3 detects a braking force in the case that the disc brake 14 fixed to the suspension unit 13 brakes the traveling wheel 11.

The control part 4a obtains information concerning the elastic deformation amount of the suspension unit 13 with time detected by the deformation amount sensors 2a and 2b and information concerning the braking force of the disc brake 14 with time detected by the braking force sensor 3,

When the deformation amount and braking force detection process 100 is finished, the wheel action force calculation process 200 is started in turn.

With regard to the wheel action force calculation process 200, wheel action force (Ft) which acts on the traveling wheel 11 at the touching part between the traveling wheel 11 and a road surface. Hereinafter, explanation will be given on the calculation method of wheel action force (Ft).

As shown in Formula 2, a force acting on the suspension unit 13 (Fh) is found as a vector sum of a force which the suspension unit 13 receives from the traveling wheel 11 (Fht) and a force which the suspension unit 13 receives from the disc brake 14 (Fhb).

$$\vec{Fh} = \vec{Fht} + \vec{Fhb} \qquad \text{(Formula 2)}$$

As shown in Formula 3, in the case that the traveling wheel 11 does not receive external force without a force from the suspension unit 13 and the road surface, a force which the suspension unit 13 receives from the traveling wheel 11 (Fht) is equal to force which the traveling wheel 11 receives from the road surface, that is, wheel action force (Ft) which acts on the traveling wheel 11 at the touching part between the traveling wheel 11 and a road surface.

$$\vec{Fht} = \vec{Ft} \qquad \text{(Formula 3)}$$

As shown in Formula 4, a force which the suspension unit 13 receives from the disc brake 14 (Fhb) is equal to a force which the disc brake 14 receives from the traveling wheel 11, that is, a reaction force of a braking force of the disc brake 14 (-Fb).

$$\overrightarrow{Fhb} = -\overrightarrow{Fb} \qquad \text{(Formula 4)}$$

According to Formulas 2, 3 and 4, a force acting on the suspension unit 13 (Fh) is indicated by below Formula 5 with wheel action force (Ft) and a braking force of the disc brake 14 (Fb).

$$\overrightarrow{Fh} = \overrightarrow{Ft} - \overrightarrow{Fb} \qquad \text{(Formula 5)}$$

According to Formula 5, a wheel action force (Ft) is indicated by below Formula 6 with a force acting on the suspension unit 13 (Fh) and a braking force of the disc brake 14 (Fb).

$$\overrightarrow{Ft} = \overrightarrow{Fh} + \overrightarrow{Fb} \qquad \text{(Formula 6)}$$

According to Formulas 1 and 6, longitudinal component (Ftx), axial component (Fty) and vertical component (Ftz) of wheel action force Ft of the traveling wheel 11 are indicated by below Formulas 7, 8 and 9.

$$\overrightarrow{Ftx} = \overrightarrow{Fhx} + \overrightarrow{Fbx} \qquad \text{(Formula 7)}$$

$$\overrightarrow{Fty} = \overrightarrow{Fhy} + \overrightarrow{Fby} \qquad \text{(Formula 8)}$$

$$\overrightarrow{Ftz} = \overrightarrow{Fhz} + \overrightarrow{Fbz} \qquad \text{(Formula 9)}$$

Herein, Fhi (i = x, y, z) is a component of i-direction (longitudinal, axial or vertical direction of the traveling wheel 11) of force which the suspension unit 13 receives from the traveling wheel 11, that is, component of i-direction (longitudinal, axial or vertical direction of the traveling wheel 11) of a force which acts on the suspension unit 13.

Fbi (i = x, y, z) is a component of i-direction (longitudinal, axial or vertical direction of the traveling wheel 11) of a braking force of the disc brake 14.

With regard to the wheel action force calculation process 200, based on the obtained information concerning elastic deformation amount of the suspension unit 13 with time, the control part 4a calculates a longitudinal force acting on the suspension unit 13 (Fhx), an axial force acting on the suspension unit 13 (Fhy) and a vertical force acting on the suspension unit 13 (Fhz) (see Figs. 1 and 3).

More concretely, information concerning relation between a deformation amount of the suspension unit and a longitudinal force, an axial force and a vertical force acting on the suspension unit obtained by experimentation has been stored in the storage means of the control part 4a previously. By comparing the information concerning relation between a deformation amount of the suspension unit and a wheel action force obtained by the experimentation with the information concerning an elastic deformation amount of the suspension unit 13 with time obtained in the deformation amount and braking force detection process 100, a longitudinal force acting on the suspension unit 13 (Fhx), an axial force acting on the suspension unit 13 (Fhy) and a vertical force acting on the suspension unit 13 (Fhz) (see Figs. 1 and 3) are calculated.

Next, based on the obtained information concerning elastic deformation amount of the caliper 14c with time, the control part 4a calculates braking force of the disc brake 14 (Fb in Fig. 3).

More concretely, information concerning a relation between a deformation amount of the caliper and a braking force obtained by experimentation has been stored in the storage means of the control part 4a previously. By comparing the information concerning a relation between a deformation amount of the caliper and a braking force obtained by the experimentation with the information concerning an elastic deformation amount of the caliper 14c with time obtained in the deformation amount and braking force detection process 100, braking force of the disc brake 14 is calculated.

Subsequently, the control part 4a calculates a longitudinal component of the braking force of the disc brake 14 (Fbx), an axial component of the braking force of the disc brake 14 (Fby) and a vertical component of the braking force of the disc brake 14 (Fbz) (see Fig. 3).

Since the disc brake 14 is a piston floating type in this embodiment, it can be considered that an axial component of the braking force of the disc brake 14 (Fby) is zero.

The strength of a longitudinal component of a braking force of the disc brake 14 (Fbx) and the strength of a vertical component of the braking force of the disc brake 14 (Fbz) are respectively indicated by below Formulas 10 and 11.

$$|\overrightarrow{Fbx}| = |\overrightarrow{Fb}| \times \sin\theta \qquad (0° \leqq \theta \leqq 90°) \qquad \text{(Formula 10)}$$

$$|\overrightarrow{Fbz}| = |\overrightarrow{Fb}| \times \cos\theta \qquad (0° \leqq \theta \leqq 90°) \qquad \text{(Formula 11)}$$

Herein, as shown in Fig. 3, an angle $\theta$ is made between a straight line, passing through a point of action 31 of the braking force of the disc brake 14 and a center 32 of the rotary shaft of the traveling wheel 11, and a horizontal plane.

Accordingly, the longitudinal component and vertical component of the braking force of the disc brake 14 are calculated by the braking force (Fb) and the angle $\theta$.

In addition, normally, supposing that the shape of each of the pads 14d and 14e is symmetrical about the perimeter of the traveling wheel 11 when viewed from the axial direction of the traveling wheel so that the pads 14d and 14e touch the rotor 14a substantially uniformly (a certain part of the touching surface of the pad 14d or 14e does not touch the rotor 14a strongly) at the time of braking, the peripheral and radial center of each of the pads 14d and 14e viewed from the axial direction of the traveling wheel 11 is considered as the point of action 31 of the braking force of the disc brake 14. However, in the case that the shape of each of the pads 14d and 14e is not symmetrical or corresponding to the state of touching between each of the pads 14d and 14e and the rotor 14a, another position may alternatively be considered as the point of action of the braking force of the disc brake.

Subsequently, the control part 4a regards the result of subtracting longitudinal component of a reaction force of a braking force of the disc brake 14 (-Fbx) from a longitudinal force acting on the suspension unit 13 (force which the suspension unit 13 receives from the traveling wheel 11) (Fhx) as a longitudinal force acting on the traveling wheel 11 (Ftx) (see Formula 7).

The control part 4a regards an axial force acting on the suspension unit 13 (Fhy) as an axial force acting on the traveling wheel 11 (Fty) (see Formula 8).

Furthermore, the control part 4a regards the result of subtracting a vertical component of a reaction force of a braking force of the disc brake 14 (-Fbz) from a vertical force acting on the suspension unit 13 (Fhz) as a vertical force acting on the traveling wheel 11 (Ftz) (see Formula 9).

Accordingly, the control part 4a calculates a wheel action force (Ft) acting on the traveling wheel 11 at the touching part between the traveling wheel 11 and a road surface.

As the above mentioned, the wheel action force detection system 1 comprises: the deformation amount sensors 2a and 2b detecting an elastic deformation amount of the suspension unit 13 which pivotally supports the traveling wheel 11 rotatably; the braking force sensor 3 detecting a braking force in the case that the disc brake 14 fixed to the suspension unit 13 brakes the traveling wheel 11; and the control part 4a calculating a longitudinal force, an axial force and a vertical force acting on the suspension unit 13 based on the elastic deformation amount of the suspension unit 13, regarding the result of subtracting a longitudinal component of a reaction force of a braking force of the disc brake 14 from a longitudinal force acting on the suspension unit 13 as a longitudinal force acting on the traveling wheel 11, and regarding the result of subtracting a vertical component of a reaction force of a braking force of the disc brake 14 from a vertical force acting on the suspension unit 13 as a vertical force acting on the traveling wheel 11 so as to calculate a wheel action force acting on the traveling wheel 11 at the touching part between the traveling wheel 11 and a road surface.

Accordingly, wheel action force can be found easily only by providing the deformation amount sensors 2a and 2b and the braking force sensor 3 in the suspension unit 13 and the disc brake 14 of the conventional vehicle. It is not necessary to provide any large-scale detection device in the vicinity of the traveling wheel, whereby the present invention can be adopted to not only a test concerning detection of wheel action force under the condition substantially same as the actual traveling but also a vehicle performing actual traveling.

Furthermore,a wheel action force at the time of braking of the vehicle having the disc brake 14 can be easily detected with high accuracy by revising an influence of braking of the disc brake 14 on deformation amount of the suspension unit 13.

Especially in the case of providing the wheel action force detection system 1 in a vehicle performing normal traveling, information concerning a wheel action force obtained by the wheel action force detection system 1 is offered to functions such as ABS, TRC and VSC so as to utilize the functions more effectively.

The control part 4a of the wheel action force detection system 1 calculates longitudinal and vertical components of a braking force of the disc brake 14 from the braking force of the disc brake 14, and the angle θ between a straight line, passing through the point of action 31 of the braking force of the disc brake 14 and the center 32 of the rotary shaft of the traveling wheel 11, and a horizontal plane.

Accordingly, the longitudinal and vertical components of a braking force of the disc brake 14 can be found with high accuracy by easy calculation.

In addition, with regard to the wheel action force detection system 1, it is preferable that the angle θ between the straight line, passing through the point of action 31 of the braking force of the disc brake 14 and the center 32 of the rotary shaft of the traveling wheel 11, and a horizontal plane is not more than 10 degrees upward or downward from the horizontal plane.

In addition, with regard to the vehicle of this embodiment, the disc brake 14 is arranged behind the center 32 of the rotary shaft of the traveling wheel on the basis of the traveling direction of the vehicle. However, the disc brake may alternatively be arranged before the center of the rotary shaft of the traveling wheel on the basis of the traveling direction of the vehicle.

One of embodiments of the wheel action force detection method according to the present invention comprises: the deformation amount and braking force detection process 100 detecting an elastic deformation amount of the suspension unit 13 which pivotally supports the traveling wheel 11 rotatably and detecting a braking force in the case that the disc brake 14 fixed to the suspension unit 13 brakes the traveling wheel 11; and the wheel action force calculation process 200 calculating a longitudinal force, an axial force and a vertical force acting on the suspension unit 13 based on the elastic deformation amount of the suspension unit 13, regarding the result of subtracting a longitudinal component of a reaction force of a braking force of the disc brake 14 from a longitudinal force acting on the suspension unit 13 as a longitudinal force acting on the traveling wheel 11, and regarding the result of subtracting a vertical component of a reaction force of a braking force of the disc brake 14 from a vertical force acting on the suspension unit 13 as a vertical force acting on the traveling wheel 11 so as to calculate a wheel action force acting on the traveling wheel 11 at the touching part between the traveling wheel 11 and a road surface.

Accordingly, a wheel action force can be found easily only by providing the deformation amount sensors 2a and 2b and the braking force sensor 3 in the suspension unit 13 and the disc brake 14 of the conventional vehicle. It is not necessary to provide any large-scale detection device in the vicinity of the traveling wheel, whereby the present invention can be adopted to not only a test concerning detection of a wheel action force under the condition substantially same as the actual traveling but also a vehicle performing actual traveling.

Furthermore, a wheel action force at the time of braking of the vehicle having the disc brake 14 can be easily detected with high accuracy by revising an influence of a braking of the disc brake 14 on deformation amount of the suspension unit 13.

Especially in the case of adopting the wheel action force detection method in this embodiment to a vehicle performing normal traveling, information concerning wheel action force obtained by the wheel action force detection method in this embodiment is offered to functions such as ABS, TRC and VSC so as to utilize the functions more effectively.

With regard to one of embodiments of the wheel action force detection method according to the present invention, under the wheel action force calculation process 200, longitudinal and vertical components of a braking force of the disc brake 14 is calculated from the braking force of the disc brake 14, and the angle θ between the straight line, passing through the point of action 31 of the braking force of the disc brake 14 and the center 32 of the rotary shaft of the traveling wheel 11, and a horizontal plane.

Accordingly, the longitudinal and vertical components of a braking force of the disc brake 14 can be found with high accuracy by easy calculation.

In addition, in embodiments of the wheel action force detection method according to the present invention, it is preferable that the angle θ between a straight line, passing through the point of action 31 of the braking force of the disc brake 14 and the center 32 of the rotary shaft of the traveling wheel 11, and a horizontal plane is not more than 10 degrees upward or downward from the horizontal plane.

In addition, with regard to the vehicle of this embodiment, the disc brake 14 is arranged behind the center 32 of the rotary shaft of the traveling wheel on the basis of the traveling direction of the vehicle. However, the disc brake may alternatively be arranged before the center of the rotary shaft of the traveling wheel on the basis of the traveling direction of the vehicle.

**Claims**

1.  A wheel action force detection system [1] comprises:

    a deformation amount detection means [2a,2b] detecting an elastic deformation amount of a pivotal support member [12b,13,17] which pivotally supports a wheel [11] rotatably;
    a braking force detection means [3] detecting a braking force in a case that a disc brake[14] fixed to the pivotal support member [12b,13,17] brakes the wheel [11]; and
    a wheel action force calculation means [4] calculating a wheel action force acting on the wheel [11] at a touching part between the wheel [11] and a road surface,
    wherein the wheel action force calculation means [4] calculates a longitudinal force, an axial force and a vertical force acting on the pivotal support member from the elastic deformation amount of the pivotal support member [12b,13,17], and
    calculates longitudinal and vertical components of the braking force of the disc brake [14] from the braking force of the disc brake [14] and an angle between a straight line, passing through a point of action of the braking force of the disc brake [14] and a center of the rotary shaft of the wheel, and a horizontal plane, and
    calculates the wheel action force from a result of subtracting a longitudinal component of a reaction force of the braking force of the disc brake [14] from a longitudinal force acting on the pivotal support member [12b,13,17] as a longitudinal force acting on the wheel and a result of subtracting a vertical component of the reaction force of the braking force of the disc brake [14] from a vertical force acting on the pivotal support member [12b,13,17] as a vertical force acting on the wheel,
    wherein the angle is not more than 10 degrees upward or downward from the horizontal plane.

2.  A wheel action force detection method comprises:

    a deformation amount and braking force detection process [100] detecting an elastic deformation amount of a pivotal support member which pivotally supports a wheel rotatably and detecting a braking force in a case that a disc brake fixed to the pivotal support member brakes the wheel; and
    a wheel action force calculation process [208] calculating a wheel action force acting on the wheel at a touching part between the wheel and a road surface,
    wherein the wheel action force calculation process [200] calculates a longitudinal force, an axial force and a vertical force acting on the pivotal support member from the elastic deformation amount of the pivotal support member, and
    calculates longitudinal and vertical components of the braking force of the disc brake from the braking force of the disc brake and an angle between a straight line, passing through a point of action of the braking force of the disc brake and a center of a rotary shaft of the wheel, and a horizontal plane, and
    calculates the wheel action force from a result of subtracting a longitudinal component of a reaction force of the braking force of the disc brake from a longitudinal force acting on the pivotal support member as a longitudinal force acting on the wheel and a result of subtracting a vertical component of the reaction force of the braking force of the disc brake from a vertical force acting on the pivotal support member as a vertical force acting on the wheel,
    wherein the angle is not more than 10 degrees upward and downward from the horizontal plane.

**Patentansprüche**

1.  Radwirkungskraft-Erfassungssystem (1), das umfasst:

    ein Verformungsbetrag-Erfassungsmittel (2a, 2b), das einen Betrag der elastischen Verformung eines Drehlagerelements (12b, 13, 17) erfasst, das ein Rad (11) drehbar rotierbar lagert;
    ein Bremskraft-Erfassungsmittel (3), das eine Bremskraft in einem Fall erfasst, dass eine an dem Drehlagerelement (12b, 13, 17) befestigte Scheibenbremse (14) das Rad (11) bremst; und
    ein Radwirkungskraft-Berechnungsmittel (4), das eine an einem Berührungsbereich zwischen dem Rad (11) und einer Straßenoberfläche auf das Rad (11) wirkende Radwirkungskraft berechnet,

wobei das Radwirkungskraft-Berechnungsmittel (4) aus dem Betrag der elastischen Verformung des Drehlagerelements (12b, 13, 17) eine auf das Drehlagerelement wirkende Längskraft, Axialkraft und Vertikalkraft berechnet, und

aus der Bremskraft der Scheibenbremse (14) und aus einem Winkel zwischen einer Geraden, die durch einen Wirkungspunkt der Bremskraft der Scheibenbremse (14) und durch eine Mitte der Drehwelle des Rads geht, und einer horizontalen Ebene die Längs- und die Vertikalkomponente der Bremskraft der Scheibenbremse (14) berechnet, und

aus einem Ergebnis der Subtraktion einer Längskomponente einer Reaktionskraft der Bremskraft der Scheibenbremse (14) von einer Längskraft, die auf das Drehlagerelement (12b, 13, 17) wirkt, als eine auf das Rad wirkende Längskraft, und aus einem Ergebnis der Subtraktion einer Vertikalkomponente der Reaktionskraft der Bremskraft der Scheibenbremse (14) von einer Vertikalkraft, die auf das Drehlagerelement (12b, 13, 17) wirkt, als eine auf das Rad wirkende Vertikalkraft, die Radwirkungskraft berechnet,

wobei der Winkel nicht mehr als 10 Grad nach oben oder unten gegenüber der horizontalen Ebene beträgt.

2. Radwirkungskraft-Erfassungsverfahren, das umfasst:

einen Verformungsbetrag- und Bremskrafterfassungsprozess (100), der einen Betrag der elastischen Verformung eines Drehlagerelements erfasst, das ein Rad drehbar rotierbar lagert, und, falls eine an dem Bremsstützelement befestigte Scheibenbremse das Rad bremst, eine Bremskraft erfasst; und

einen Radwirkungskraft-Berechnungsprozess (200), der eine an einem Berührungsbereich zwischen dem Rad und einer Straßenoberfläche auf das Rad wirkende Radwirkungskraft berechnet,

wobei der Radwirkungskraft-Berechnungsprozess (200) aus dem Betrag der elastischen Verformung des Drehlagerelements eine auf das Drehlagerelement wirkende Längskraft, Axialkraft und Vertikalkraft berechnet, und

aus der Bremskraft der Scheibenbremse und aus einem Winkel zwischen einer Geraden, die durch einen Wirkungspunkt der Bremskraft der Scheibenbremse und durch eine Mitte einer Drehwelle des Rads geht, und einer horizontalen Ebene die Längs- und die Vertikalkomponente der Bremskraft der Scheibenbremse berechnet, und

aus einem Ergebnis der Subtraktion einer Längskomponente einer Reaktionskraft der Bremskraft der Scheibenbremse von einer Längskraft, die auf das Drehlagerelement wirkt, als eine auf das Rad wirkende Längskraft, und aus einem Ergebnis der Subtraktion einer Vertikalkomponente der Reaktionskraft der Bremskraft der Scheibenbremse von einer Vertikalkraft, die auf das Drehlagerelement wirkt,

als eine auf das Rad wirkende Vertikalkraft, die Radwirkungskraft berechnet,

wobei der Winkel nicht mehr als 10 Grad nach oben oder unten gegenüber der horizontalen Ebene beträgt.

**Revendications**

1. Système de détection de la force d'action d'une roue (1) comprenant :

un moyen de détection de la quantité de déformation (2a, 2b) détectant une quantité de déformation élastique d'un élément de support pivotant (12b, 13, 17) qui supporte à pivotement une roue (11) de manière à lui permettre de tourner ;

un moyen de détection de la force de freinage (3) détectant une force de freinage dans un cas où un frein à disque (14) fixé à l'élément de support pivotant (12b, 13, 17) freine la roue (11) ; et

un moyen de calcul de la force d'action d'une roue (4) calculant une force d'action d'une roue agissant sur la roue (11) au niveau d'une partie de contact entre la roue (11) et une surface de route,

dans lequel le moyen de calcul de la force d'action d'une roue (4) calcule une force longitudinale, une force axiale et une force verticale agissant sur l'élément de support pivotant à partir de la quantité de déformation élastique de l'élément de support pivotant (12b, 13, 17), et

calcule des composantes longitudinale et verticale de la force de freinage du frein à disque (14) à partir de la force de freinage du frein à disque (14) et d'un angle entre une ligne droite passant à travers un point d'action de la force de freinage du frein à disque (14) et un centre de l'arbre rotatif de la roue, et un plan horizontal, et

calcule la force d'action d'une roue à partir d'un résultat de la soustraction d'une composante longitudinale d'une force de réaction de la force de freinage du frein à disque (14) d'une force longitudinale agissant sur l'élément de support pivotant (12b, 13, 17) en tant que force longitudinale agissant sur la roue et d'un résultat de la soustraction d'une composante verticale de la force de réaction de la force de freinage du frein à disque (14) d'une force verticale agissant sur l'élément de support pivotant (12b, 13, 17) en tant que force verticale agissant sur la roue,

dans lequel l'angle ne dépasse pas 10 degrés vers le haut ou vers le bas depuis le plan horizontal.

2. Procédé de détection de la force d'action d'une roue comprenant :

un processus de détection de la quantité de déformation et de la force de freinage (100) détectant une quantité de déformation élastique d'un élément de support pivotant qui supporte à pivotement une roue de manière à pouvoir tourner et

détectant une force de freinage dans un cas où un frein à disque fixé à l'élément de support pivotant freine la roue ; et

un processus de calcul de la force d'action d'une roue (200) calculant une force d'action d'une roue agissant sur la roue au niveau d'une partie de contact entre la roue et une surface de route,

dans lequel le processus de calcul de la force d'action d'une roue (200) calcule une force longitudinale, une force axiale et une force verticale agissant sur l'élément de support pivotant à partir de la quantité de déformation élastique de l'élément de support pivotant, et calcule des composantes longitudinale et verticale de la force de freinage du frein à disque à partir de la force de freinage du frein à disque et d'un angle entre une ligne droite passant à travers un point d'action de la force de freinage du frein à disque et un centre d'un arbre rotatif de la roue, et un plan horizontal, et

calcule la force d'action d'une roue à partir d'un résultat de la soustraction d'une composante longitudinale d'une force de réaction de la force de freinage du frein à disque d'une force longitudinale agissant sur l'élément de support pivotant en tant que force longitudinale agissant sur la roue et d'un résultat de la soustraction d'une composante verticale de la force de réaction de la force de freinage du frein à disque d'une force verticale agissant sur l'élément de support pivotant en tant que force verticale agissant sur la roue,

dans lequel l'angle ne dépasse pas 10 degrés vers le haut et vers le bas depuis le plan horizontal.

Fig. 1

Fig. 2

```
                    ┌─────────────┐
                    │    START    │
                    └──────┬──────┘
                           │
                           ▼
          ┌────────────────────────────────┐
          │  deformation amount and braking │────100
          │      force detection process    │
          └────────────────┬────────────────┘
                           │
                           ▼
          ┌────────────────────────────────┐
          │      wheel action force         │────200
          │      calculation process        │
          └────────────────┬────────────────┘
                           │
                           ▼
                    ┌─────────────┐
                    │     END     │
                    └─────────────┘
```

Fig. 3

traveling direction
of vehicle

Fhz

rotation direction of wheel

14a

11

32

31

14d(14e)

Fhx

Fbx

θ

Fbz

Fb

Ftx

Ftz

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004045370 A
- JP 2002350254 A
- JP 2003014563 A
- US 2003145651 A